# EUROPEAN PATENT APPLICATION

(11) **EP 4 265 700 A1**
(43) Date of publication of application: **25.10.2023**
(21) Application number: 21898362.5
(22) Date of filing: 22.10.2021
(51) Int. Cl.: C09J 101/16, C08L 1/12, C09J 11/04, C09J 11/06

(54) **ADHESIVE, TOTAL HEAT EXCHANGE ELEMENT AND STRUCTURE COMPRISING DRIED ADHESIVE LAYER, AND PRODUCTION METHODS FOR SAME**

(30) Priority: 24.11.2020 KR 20200159354
(71) Applicant: LG Electronics Inc., Yeongdeungpo-gu Seoul 07336 (KR)
(72) Inventor: LEE, Dongwook, Seoul 06772 (KR); KIM, Hongjung, Seoul 06772 (KR); JUNG, Kyungho, Seoul 06772 (KR); KWON, Junhan, Seoul 06772 (KR)
(74) Representative: Vossius & Partner Patentanwälte Rechtsanwälte mbB
(86) International application number: PCT/KR2021/014865
(87) International publication number: WO 2022/114536

(57) **Abstract**

The present invention can be applied to the technical field of adhesives, and relates to, for example, an adhesive comprising cellulose fibres, a total heat exchange element and structure comprising a dried adhesive layer, and production methods for same. The present invention is an adhesive comprising solid content dispersed in water, wherein the solid content may comprise: nano cellulose fibres; and carboxymethyl cellulose having a carboxymethyl group.

## Description

### [Technical Field]

The present disclosure is applicable to an adhesive-related technical field, and relates to, for example, an adhesive containing cellulose fibers, a structure and a total heat exchanging element including a dried adhesive layer, and a method for producing the same.

### [Background]

Nanocellulose is a material in a form in which crystalline and amorphous portions of cellulose, a main component of a plant cell wall, are combined to each other and having a diameter of a nanometer level and a length of a micrometer level. Such nanocellulose is an eco-friendly material with a great aspect ratio and excellent mechanical properties.

Such nanocellulose may be prepared with methods such as mechanical grinding, chemical dissolution, biological culture, and the like. The nanocellulose obtained mainly via the mechanical grinding and the chemical dissolution is obtained in a form of a suspension dispersed in water because of a hydrophilic functional group (a hydroxyl group) thereof, and is able to be applied as a composite material reinforcing agent, a thickening agent, a cosmetic additive, and the like.

One of uses of such nanocellulose is to be used for an adhesive. In addition, the adhesive using such nanocellulose may be used for bonding of a total heat exchanging element.

However, there are problems to be solved for the adhesive using the nanocellulose and for bonding of the total heat exchanging element using the same.

For example, the invention described in the prior art document (Patent Document 1) below is an invention related to the adhesive using the nanocellulose. The adhesive according to the invention described in Patent Document 1 may be generated by combining the nanocellulose and starch with each other respectively at a concentration of 0.1 % by weight (wt %) to 12.0 % by weight and 0.1 % by weight to 12.0 % by weight based on a total weight of the adhesive, and may be applied to a surface of a paper product to be bonded.

However, the starch contained in the adhesive is easily degraded by microorganisms, so that there is a problem in that an adhesive strength decreases over time, and also is a problem in that the starch is vulnerable to bacterial and fungal growth.

The invention described in the prior art document (Patent Document 2) below is an invention related to the adhesive using the nanocellulose. Patent Document 2 discloses a method for producing a natural adhesive containing ground (separated) cellulose having a diameter in a range from 300 *µ*m to 1 nm and water.

However, the adhesive composed only of the nanocellulose has problems in that, when applied to paper, moisture spreads, resulting in strength deterioration until drying, and wrinkles in the applied paper after the drying.

Therefore, there is a need for a method capable of solving the problems of the prior art.

### [Summary]

### [Technical Problem]

The present disclosure is to provide an adhesive that may prevent moisture spreading when being applied and thus prevent weakening of an adhesive strength when being dried, a structure and a total heat exchanging element including a dried adhesive layer, and a method for producing the same.

In addition, the present disclosure provides an adhesive that may prevent weakening of an adhesive strength when being dried by being imparted with hygroscopicity, a structure and a total heat exchanging element including a dried adhesive layer, and a method for producing the same.

In addition, the present disclosure provides an adhesive that may be impaired with retardancy, a structure and a total heat exchanging element including a dried adhesive layer, and a method for producing the same.

In addition, the present disclosure provides an adhesive that may be imparted with antibacterial properties, a structure and a total heat exchanging element including a dried adhesive layer, and a method for producing the same.

In addition, the present disclosure provides an adhesive that may improve a total heat exchange efficiency when applied to a total heat exchanging element, a structure and the total heat exchanging element including a dried adhesive layer, and a method for producing the same.

Furthermore, according to another embodiment of the present disclosure, there are additional technical effects not mentioned herein. Those skilled in the art will be able to understand this via entire meaning of the present document and drawings.

### [Technical Solutions]

As a first aspect for solving the technical problem, the present disclosure provides an adhesive containing a solid content dispersed in water, wherein the solid content contains nanocellulose, and carboxy methyl cellulose endowed with a carboxy methyl group.

In addition, the adhesive may contain 0.1 to 5 % by weight of the nanocellulose and 0.1 to 5 % by weight of the carboxy methyl cellulose.

In addition, the adhesive may further contain an inorganic moisture absorbent.

In addition, the inorganic moisture absorbent may include at least one of calcium chloride, lithium chloride, magnesium chloride, or silica gel.

In addition, the adhesive may contain 0.1 to 1 % by weight of the inorganic moisture absorbent.

In addition, the adhesive may further contain an antimicrobial agent.

In addition, the antimicrobial agent may include at least one of a porous inorganic antimicrobial agent loaded with Ag, Cu, or Zn, or an organic antimicrobial agent containing bronopol, phenylphenols, or benzothiazolines.

In addition, the adhesive may contain 0.1 to 1 % by weight of the antimicrobial agent.

In addition, the nanocellulose may have a diameter in a range from 1 to 50 nm.

In addition, the nanocellulose may be endowed with a phosphoric acid functional group.

In addition, each of the phosphoric acid functional group and the carboxy methyl group may be endowed at a ratio in a range from 0.5 to 3.0 mmol/g.

In addition, the carboxy methyl cellulose may prevent the water from spreading to an object to be adhered.

In addition, a content of the water may be in a range from 88.0 to 99.6 % by weight.

As a second aspect for solving the technical problem, the present disclosure provides a structure including a dried adhesive layer located between a first member and a second member, wherein the dried adhesive layer contains 15 to 35 % by weight of nanocellulose, and 65 to 85 % by weight of carboxy methyl cellulose endowed with a carboxy methyl group.

In addition, the dried adhesive layer may further contain an inorganic moisture absorbent.

In addition, the dried adhesive layer may further contain an antimicrobial agent.

As a third aspect for solving the technical problem, the present disclosure provides a total heat exchanging element having a dried adhesive layer including a first total heat exchanging sheet, a second total heat exchanging sheet, and the dried adhesive layer positioned between the first total heat exchanging sheet and the second total heat exchanging sheet, wherein the dried adhesive layer contains 15 to 35 % by weight of nanocellulose, and 65 to 85 % by weight of carboxy methyl cellulose endowed with a carboxy methyl group.

In addition, the first total heat exchanging sheet may be a member for heat exchange, and the second total heat exchanging sheet may be a spacer positioned between the first total heat exchanging sheets to define a space for air to pass.

As a fourth aspect for solving the technical problem, the present disclosure provides a method for producing an adhesive containing a solid content dispersed in water including obtaining a first solution in which nanocellulose is dispersed, obtaining a second solution in which carboxy methyl cellulose to which a carboxy methyl group is endowed is dispersed, and mixing the first solution and the second solution with each other.

In addition, the method may further include adding an inorganic moisture absorbent to the mixture.

In addition, the method may further include adding an antimicrobial agent to the mixture.

In addition, the nanocellulose may be endowed with a phosphoric acid functional group.

In addition, the endowing of the phosphoric acid functional group may include adding pulp and phosphoric acid in an amount from 1 :0.01 to 1:0.5 wt % to obtain the nanocellulose.

### [Advantageous Effects]

The embodiment of the present disclosure has the following effects.

First, the adhesive according to the present disclosure has the effect of imparting the hygroscopicity, the flame retardancy, the properties that prevent the spread of the moisture, and the antibacterial properties to the adhesive.

In addition, when the adhesive according to the present disclosure is used for the total heat exchanging element, the hygroscopicity is imparted to improve the latent heat exchange efficiency.

In addition, the adhesive according to the present disclosure may maintain the high adhesive strength even at the relatively low drying temperature, and may be imparted with the flame retardancy by the phosphate functional group without the separate flame retardant.

In addition, when the work is performed using the adhesive according to the present disclosure, the work efficiency in the process may be improved.

### [Brief Description of the Drawings]

FIG. 1 is a schematic diagram illustrating an adhesive according to an embodiment of the present disclosure.
FIG. 2 is a schematic diagram showing a moisture trapping ability of an adhesive according to Present Example of the present disclosure.
FIG. 3 is a schematic diagram showing a moisture trapping state of an adhesive according to Comparative Example.
FIG. 4 is a schematic cross-sectional view showing a structure including a dried adhesive layer to which an adhesive according to an embodiment of the present disclosure is applied.
FIG. 5 is a schematic diagram illustrating a total heat exchanger and a total heat exchanging element to which an adhesive according to an embodiment of the present disclosure may be applied.
FIG. 6 is a schematic diagram illustrating an example of a total heat exchanging element to which an adhesive according to an embodiment of the present disclosure may be applied.
FIG. 7 is a schematic diagram illustrating another example of a total heat exchanging element to which an adhesive according to an embodiment of the present disclosure may be applied.
FIG. 8 is a schematic diagram illustrating still another example of a total heat exchanging element to which an adhesive according to an embodiment of the present disclosure may be applied.
FIG. 9 is a flowchart illustrating a method for producing an adhesive according to an embodiment of the present disclosure.
FIG. 10 is a flowchart illustrating a process of obtaining a solution in which nanocellulose is dispersed in a method for producing an adhesive according to an embodiment of the present disclosure.
FIG. 11 is a flowchart illustrating a process of obtaining a solution in which carboxy methyl cellulose is dispersed in a method for producing an adhesive according to an embodiment of the present disclosure.

### [Detailed Description]

Reference will now be made in detail to embodiments of the present disclosure, examples of which are illustrated in the accompanying drawings. Wherever possible, the same reference numbers will be used throughout the drawings to refer to the same or like parts, and redundant description thereof will be omitted. As used herein, the suffixes "module" and "unit" are added or used interchangeably to facilitate preparation of this specification and are not intended to suggest distinct meanings or functions. In describing embodiments disclosed in this specification, relevant well-known technologies may not be described in detail in order not to obscure the subject matter of the embodiments disclosed in this specification. In addition, it should be noted that the accompanying drawings are only for easy understanding of the embodiments disclosed in the present specification, and should not be construed as limiting the technical spirit disclosed in the present specification.

Furthermore, although the drawings are separately described for simplicity, embodiments implemented by combining at least two or more drawings are also within the scope of the present disclosure.

In addition, when an element such as a layer, region or module is described as being "on" another element, it is to be understood that the element may be directly on the other element or there may be an intermediate element between them.

The present disclosure relates to an adhesive and a method for producing the same. For example, the adhesive according to the present disclosure may be used for a total heat exchanging element.

Such adhesive according to the present disclosure has an advantage capable of being imparted with hygroscopicity, flame retardancy, properties that prevent spread of moisture, and antibacterial properties.

An adhesive strength and the flame retardancy of the adhesive may be realized by nanocellulose. In addition, the properties that prevent the spread of the moisture of the adhesive may be realized by carboxy methyl cellulose.

For example, the flame retardancy may be imparted by a phosphate group of the nanocellulose. In addition, a phenomenon in which the moisture spreads to paper may be reduced by a moisture affinity of the carboxy methyl cellulose.

In addition, the hygroscopicity of the adhesive may be realized by an inorganic moisture absorbent. In addition, the antibacterial properties may be realized by addition of an antimicrobial agent.

The adhesive may contain a phosphate functional group of the nanocellulose. As such, functionalities may be imparted to the adhesive because of excellent binding properties of the phosphate-treated nanocellulose and additives including the carboxy methyl cellulose, the inorganic moisture absorbent, and the antibacterial agent.

A hydroxyl group (-OH) present in the nanocellulose and the carboxymethyl cellulose may be combined with cationic functional additive materials.

Such adhesive according to the present disclosure may be used for the total heat exchanging element. When the adhesive according to the present disclosure is used for the total heat exchanging element, a latent heat exchange efficiency may be improved as the hygroscopicity is imparted thereto. Therefore, the adhesive may contribute to improving a total heat exchange efficiency.

In addition, the adhesive according to the present disclosure may maintain high adhesive strength even at a relatively low drying temperature, and may be imparted with the flame retardancy by the phosphate functional group without a separate flame retardant.

The adhesive according to the present disclosure is a material that may be recycled by dissolving in water, is harmless to a human body and an environment, and is odorless. Therefore, when work is performed using the adhesive according to the present disclosure, a work efficiency in a process may be improved.

The nanocellulose is a crystalline polymer, which is a main component of a plant cell wall, and is a fibrous nanomaterial with a diameter equal to or smaller than 100 nm. Such nanocellulose exhibits a high strength at a level similar to a level of that of glass fiber, but has a low coefficient of thermal expansion equal to or smaller than 10 ppm/K, thereby having excellent thermal stability.

High grinding energy may be required when the nanocellulose is treated only by a mechanical process. Therefore, the present disclosure proposes a preparation method that lowers the grinding energy after a chemical pre-treatment.

Methods such as TEMPO catalytic oxidation, carboxylmethylation, sulfuric acid esterification, phosphoric acid esterification, and carbamate-phosphate esterification may be used for such chemical pre-treatment.

When using the chemical pre-treatment, the greater the amount of functional groups introduced, the greater the amounts of negative charges and hydroxyl groups, resulting in excellent water dispersibility and adhesive strength. The dispersibility refers to a property of the nanocellulose to stably float in an aqueous solution without precipitating. The adhesive strength refers to a property of being fixed and maintained by chemical bonding or physical adsorption without peeling after being applied and dried between objects to be adhered to each other, for example, between paper and paper.

The adhesive strength and the total heat exchange efficiency of the adhesive may be improved using the nanocellulose, the water, and the additives, and by adjusting a blending ratio of these components, depending on a case.

According to the present disclosure, compared to a conventional adhesive, environmental burden may be reduced, various functionalities may be provided, and ease of work in the process may be secured.

In addition, the adhesive according to the present disclosure may be applied in various ways as an adhesive capable of bonding various materials of the same or different types to each other in addition to the total heat exchanging element.

Hereinafter, an embodiment of the present disclosure will be described in detail with reference to the drawings.

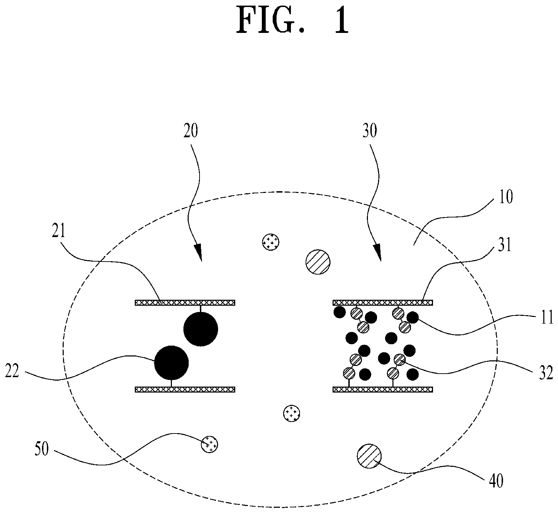

FIG. 1 is a schematic diagram illustrating an adhesive according to an embodiment of the present disclosure.

Referring to FIG. 1, an adhesive according to an embodiment of the present disclosure may be an adhesive containing a solid content dispersed in water 10. That is, the adhesive according to an embodiment of the present disclosure may be a water-based adhesive.

In this regard, the solid content dispersed in the water may contain nanocellulose 20 and carboxy methyl cellulose 30 endowed with a carboxy methyl group 32.

Such an adhesive may have 0.1 to 5 % by weight (wt %) of the nanocellulose 20 and 0.1 to 5 % by weight of the carboxy methyl cellulose 30.

In addition, the adhesive according to an embodiment of the present disclosure may further contain an inorganic moisture absorbent 40. Such an inorganic moisture absorbent 40 may include at least one of calcium chloride, lithium chloride, magnesium chloride, and silica gel.

Such an inorganic moisture absorbent 40 may be contained in the adhesive in an amount of 0.1 to 1 % by weight.

In one example, the adhesive according to an embodiment of the present disclosure may further contain an antimicrobial agent 50. The antimicrobial agent 50 may include at least one of a porous inorganic antimicrobial agent loaded with Ag, Cu, or Zn, and an organic antimicrobial agent containing bronopol, phenylphenols, or benzothiazolines.

Such an antimicrobial agent 50 may be contained in the adhesive in an amount of 0.1 to 1 % by weight.

In addition, a content of water 10 constituting a solvent of the adhesive may be 88.0 to 99.6 % by weight. That is, in the adhesive before drying, the water 10 may occupy most of a mass.

In one example, the nanocellulose 20 may be endowed with a phosphoric acid functional group 22.

In this regard, for convenience of description, the nanocellulose 20 may contain a nanocellulose fiber 21. The nanocellulose fiber 21 may be endowed with the phosphoric acid functional group 22. As such, herein, the multiple nanocellulose fibers 21 or an entity in which the nanocellulose fiber 21 is endowed with the phosphoric acid functional group 22 may be referred to as the nanocellulose 20.

Similarly, the carboxy methyl cellulose 30 may contain a nanocellulose fiber 31. The nanocellulose fiber 31 may be endowed with the carboxy methyl group 32. As such, herein, multiple nanocellulose fibers 31 or an entity in which the nanocellulose fiber 31 is endowed with the carboxy methyl group 32 may be referred to as the carboxy methyl cellulose 30.

The nanocellulose fibers 21 and 31 may have a diameter in a range from 1 to 50 nm.

In addition, the nanocellulose fibers 21 and 31 may be endowed with the phosphoric acid functional group 22 and the carboxy methyl group 32 at a ratio in a range from 0.5 to 3.0 mmol/g, respectively.

Referring to FIG. 1, a state in which water particles 11 are trapped in the carboxy methyl cellulose 30 is shown. The carboxy methyl cellulose 30 may have a high water trapping capacity. That is, many water particles 11 may be trapped in the carboxy methyl cellulose 30 containing the nanocellulose fiber 31 endowed with the carboxy methyl group 32.

Therefore, the carboxy methyl cellulose 30 may prevent the water 10 contained in the adhesive from spreading to an object to be adhered.

As such, the spreading of moisture may be prevented by the carboxy methyl cellulose 30 contained in the adhesive. Such characteristic may be particularly advantageous when the adhesive is applied to a member that may spread the moisture, such as paper.

In addition, the nanocellulose 20 contained in the adhesive may improve the adhesive strength and the flame retardancy of the adhesive. For example, the flame retardancy may be imparted by the phosphoric acid group 22 of the nanocellulose 20.

In one example, the hygroscopicity of the adhesive may be improved by the inorganic moisture absorbent 40. An appropriate amount of inorganic moisture absorbent 40 may improve a hygroscopic degree on an adhesion surface, so that the total heat exchange efficiency may be improved when the adhesive is used for the total heat exchanging element.

As mentioned, it is advantageous that the inorganic moisture absorbent 40 is contained in the appropriate amount in the adhesive. For example, when the inorganic moisture absorbent 40 is excessively contained in the adhesive, aggregation of the solid content may occur. This may cause phase separation and decrease in the adhesive strength.

In addition, the antibacterial properties may be secured by the addition of the antimicrobial agent 50.

It is advantageous that such antimicrobial agent 50 is also contained in an appropriate amount in the adhesive. For example, when the antimicrobial agent 50 is excessively contained, the adhesive strength of the adhesive may decrease.

Therefore, as mentioned above, the inorganic moisture absorbent 40 may be contained in the adhesive in an amount of 0.1 to 1 % by weight. In addition, the antimicrobial agent 50 may be contained in an amount of 0.1 to 1 % by weight in the adhesive.

As such, each functionality may be imparted to the adhesive by excellent binding properties of the additives including the phosphate-treated nanocellulose 20, the carboxy methyl cellulose 30, the inorganic moisture absorbent 40, and the antimicrobial agent 50.

That is, such an adhesive according to the present disclosure has the effect capable of being imparted with the hygroscopicity, the flame retardancy, the properties that prevent the spread of the moisture, and the antibacterial properties.

The adhesive according to the present disclosure may be used for the total heat exchanging element. When the adhesive according to the present disclosure is used for the total heat exchanging element, the hygroscopicity may be imparted to improve the latent heat exchange efficiency.

In addition, the adhesive according to the present disclosure may maintain the high adhesive strength even at the relatively low drying temperature, and may be imparted with the flame retardancy by the phosphate functional group without the separate flame retardant.

In one example, the adhesive according to the present disclosure is the material that may be recycled by dissolving in water, is harmless to the human body and the environment, and is odorless. Therefore, when the work is performed using the adhesive according to the present disclosure, the work efficiency in the process may be improved.

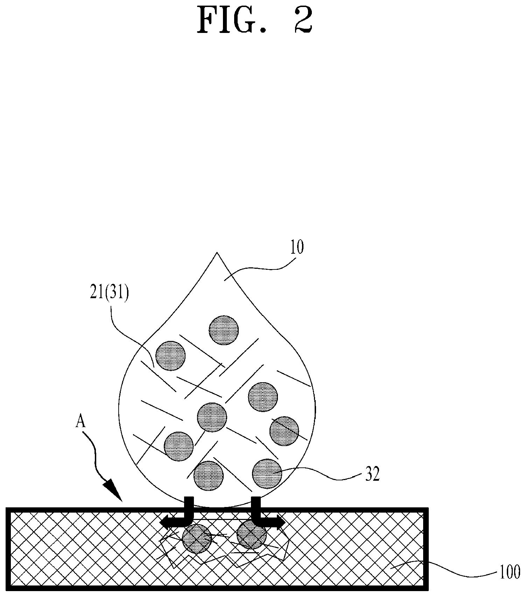

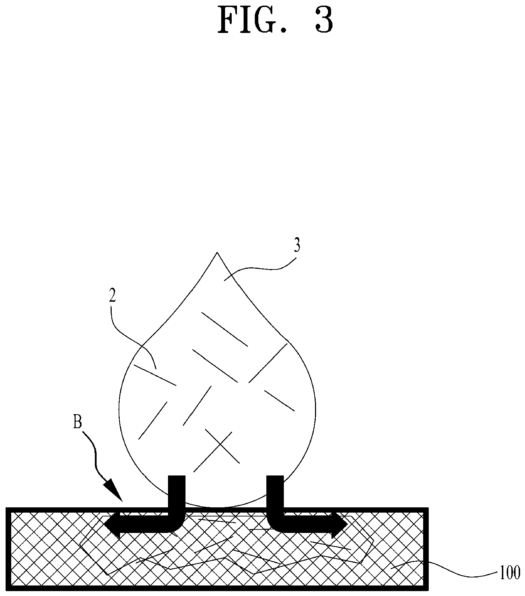

FIG. 2 is a schematic diagram showing a moisture trapping ability of an adhesive according to Present Example of the present disclosure. FIG. 3 is a schematic diagram showing a moisture trapping state of an adhesive according to Comparative Example.

Referring to FIG. 2, a state in which an adhesive according to Present Example of the present disclosure is locally applied to an object 100 to be adhered is shown. In addition, as Comparative Example, FIG. 3 shows a state in which an adhesive containing only a cellulose fiber 2 in water is locally applied to the object 100 to be adhered.

As described above, in Present Example of the present disclosure, when the carboxy methyl cellulose 30 in which the nanocellulose fibers 31 endowed with the carboxy methyl groups 32 are dispersed is dispersed in the water 10 constituting the adhesive, the water 10 is relatively strongly trapped in such a carboxy methyl cellulose 30, so that a force A to spread to the object 100 to be adhered may be relatively very weak.

In other words, as in the Comparative Example, the adhesive composed only of the cellulose may have a relatively great force B for the water 10 to spread to the object 100 to be adhered.

For example, according to Comparative Example, when the adhesive is applied to the paper, the moisture spreading occurs, so that strength deterioration may occur until the adhesive is dried. In addition, wrinkles may occur in the object 100 to be adhered after the adhesive is dried.

However, according to Present Example of the present disclosure, the water 10 is relatively strongly trapped in the carboxy methyl cellulose 30 and has a weak force to spread to the object 100 to be adhered, so that the applied state of the adhesive may be maintained until the adhesive is dried. Therefore, an adhesive strength during the application of the adhesive may be maintained, and an adhesion surface of the object 100 to be adhered may be maintained evenly even after the adhesive is dried.

Because of such phenomenon, according to Present Example of the present disclosure, when the object 100 to be adhered to which the adhesive is applied includes the paper, a better effect may be exhibited.

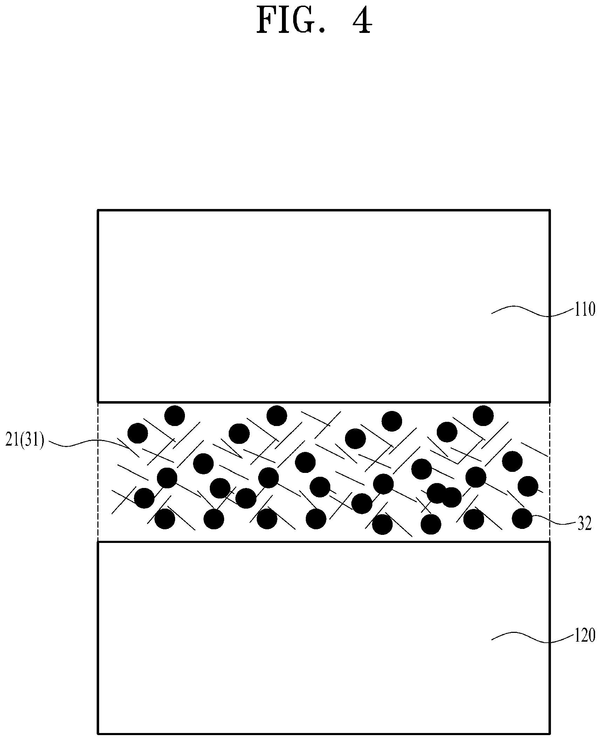

FIG. 4 is a schematic cross-sectional view showing a structure including a dried adhesive layer to which an adhesive according to an embodiment of the present disclosure is applied.

Referring to FIG. 4, a state in which the dried adhesive layer is positioned between a first member 110 and a second member 120 is illustrated.

In this regard, the dried adhesive layer may refer to a layer in which the water 10 is dried in the state in which the adhesive described above is applied. Accordingly, such dried adhesive layer may contain the nanocellulose fibers 21 and 31 and the carboxy methyl group 32.

In other words, although the nanocellulose 20 and the carboxy methyl cellulose 30 are not separately indicated in FIG. 4 as in FIG. 1, such dried adhesive layer may contain the nanocellulose 20 and the carboxy methyl cellulose 30.

As described above, the nanocellulose 20 may contain the nanocellulose fiber 21. The nanocellulose fiber 21 may be endowed with the phosphoric acid functional group 22.

Similarly, the carboxy methyl cellulose 30 may contain the nanocellulose fiber 31. The nanocellulose fiber 31 may be endowed with the carboxy methyl group 32.

In this regard, the nanocellulose fibers 21 and 31 may have a diameter in a range from 1 to 50 nm.

A content (a weight) of the carboxy methyl cellulose 30 in the dried adhesive layer may be greater than that of the nanocellulose 20.

Specifically, the dried adhesive layer may contain 15 to 35 wt % of the nanocellulose 20 and 65 to 85 wt % of the carboxy methyl cellulose 30 endowed with the carboxy methyl group 32.

In addition, although not separately indicated in FIG. 4, at least one of the inorganic moisture absorbent 40 and the antimicrobial agent 50 may be further contained in the dried adhesive layer.

When both the inorganic moisture absorbent 40 and the antimicrobial agent 50 are contained in the dried adhesive layer, a content of the inorganic moisture absorbent 40 may be greater than that of the antimicrobial agent 50.

Such inorganic moisture absorbent 40 may include at least one of the calcium chloride, the lithium chloride, the magnesium chloride, and the silica gel.

In addition, the antimicrobial agent 50 may include at least one of the porous inorganic antimicrobial agent loaded with Ag, Cu, or Zn, and the organic antimicrobial agent containing bronopol, phenylphenols, or benzothiazolines.

For example, the first member 110 and the second member 120 may be structures made of the paper. As such, the dried adhesive layer may efficiently bond the first member 110 and the second member 120 to each other.

As described above, because the water is relatively strongly trapped in the carboxy methyl cellulose 30 endowed with the carboxy methyl group 32 and has the weak force to spread to the objects 110 and 120 to be adhered, the applied state of the adhesive may be maintained until the adhesive is dried.

Therefore, the adhesive strength during the application of the adhesive may be maintained, and adhesion surfaces of the objects 110 and 120 to be adhered may be maintained evenly even with a dry adhesive obtained after the adhesive is dried.

Examples of the structure including such a dried adhesive layer may include the total heat exchanging element.

When the dried adhesive layer shown in FIG. 4 is applied to the total heat exchanging element, the first member 110 may be a first total heat exchanging sheet and the second member 120 may be a second total heat exchanging sheet.

In this regard, the first total heat exchanging sheet 110 may be a member for heat exchange, and the second total heat exchanging sheet 120 may be a spacer that is positioned between the first total heat exchanging sheets 110 to define a space through which air may flow.

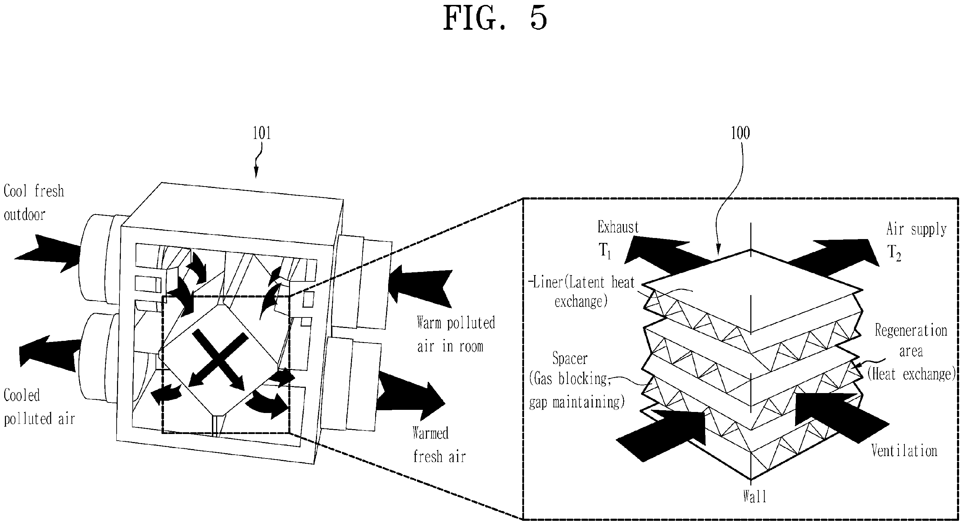

FIG. 5 is a schematic diagram illustrating a total heat exchanger and a total heat exchanging element to which an adhesive according to an embodiment of the present disclosure may be applied.

The adhesive according to an embodiment of the present disclosure may be applied to a total heat exchanger 101 shown in FIG. 5. A total heat exchanging element 100 may be disposed inside the total heat exchanger 101.

As briefly shown in FIG. 5, after cool fresh outdoor air is introduced into the total heat exchanger 101 and heat exchange occurs in the total heat exchanging element 100, the warmed fresh air may be exchanged with warm polluted air in the room, and eventually the cooled polluted air may be discharged through the total heat exchanger 101.

In this regard, the total heat exchanging element 100 includes a liner for latent heat exchange and a spacer positioned between the liners to maintain a gap, block gas, and at the same time, allow air to flow through the gap.

In this regard, the liner may correspond to the first total heat exchanging sheet 110 in FIG. 4, and the spacer may correspond to the second total heat exchanging sheet 120 in FIG. 4.

Referring to FIG. 5, the introduced air may be supplied T2 via the spacer, and then exhausted T1 as the exchange with the air in the room and the heat exchange process occur.

In addition, the total heat exchanging element 100 may be installed through a wall along a diagonal line. Hereinafter, a detailed description of the total heat exchanging element 100 will be omitted.

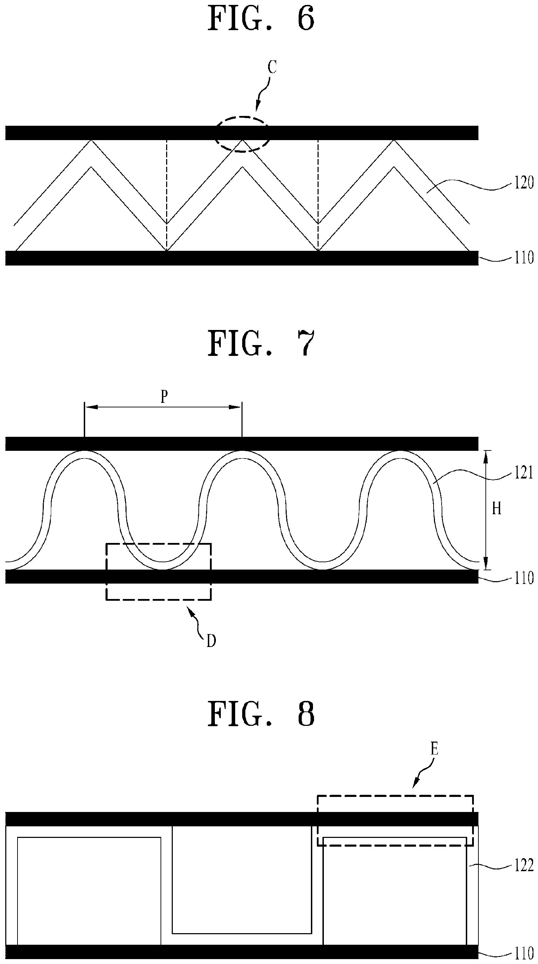

FIG. 6 is a schematic diagram illustrating an example of a total heat exchanging element to which an adhesive according to an embodiment of the present disclosure may be applied. FIG. 7 is a schematic diagram illustrating another example of a total heat exchanging element to which an adhesive according to an embodiment of the present disclosure may be applied. FIG. 8 is a schematic diagram illustrating still another example of a total heat exchanging element to which an adhesive according to an embodiment of the present disclosure may be applied.

The adhesive according to an embodiment of the present disclosure may be applied to the total heat exchanging element between the first total heat exchanging sheet 110 and second total heat exchanging sheets 120, 121, and 122. When such adhesive is dried, the dried adhesive layer may be formed.

As described above with reference to FIG. 4, the dried adhesive layer positioned between the first total heat exchanging sheet 110 and the second total heat exchanging sheets 120, 121, and 122 contains 15 to 35 % by weight of the nanocellulose 20, and 65 to 85 % by weight of the carboxy methyl cellulose 30 to which the carboxy methyl group 32 is endowed.

In addition, although not separately indicated in FIG. 4, at least one of the inorganic moisture absorbent 40 and the antimicrobial agent 50 may be further contained in the dried adhesive layer.

When both the inorganic moisture absorbent 40 and the antimicrobial agent 50 are contained in the dried adhesive layer, the content of the inorganic moisture absorbent 40 may be greater than that of the antimicrobial agent 50.

Such inorganic moisture absorbent 40 may include at least one of the calcium chloride, the lithium chloride, the magnesium chloride, and the silica gel.

The matters described with reference to FIG. 4 above may be equally applied to other matters not described.

Hereinafter, an example of the total heat exchanging element will be described with reference to the drawings.

Referring to FIG. 6, the second total heat exchanging sheet (the spacer) 120 may be disposed between the first total heat exchanging sheets (the liners) 110 in a bent form. In this regard, the adhesive may be used at a portion C where the first total heat exchanging sheet 110 and a corner of the second total heat exchanging sheet 120 meet each other.

FIG. 7 shows another example of the total heat exchanging element. Referring to FIG. 7, the second total heat exchanging sheet (the spacer) 121 may be disposed between the first total heat exchanging sheets (the liners) 110 in a curved shape. In this regard, the adhesive may be used at a portion D where the first total heat exchanging sheet 110 and an inflection point of the second total heat exchanging sheet 121 meet each other.

Compared to, A pitch P of the total heat exchanging element shown in FIG. 7 may be further reduced compared to that in the total heat exchanging element shown in FIG. 6, and accordingly, a height H may be reduced.

Compared to the case in FIG. 6, the total heat exchanging element shown in FIG. 7 may have an increased adhesion surface, and thus, a pressure loss thereof may be reduced.

In this regard, in the case of FIG. 7, it may be seen that a contact area D increases. Therefore, an effect of a performance of the adhesive on an efficiency of the total heat exchanging element may be increased.

In addition, when the hygroscopicity is imparted to the adhesive, the latent heat exchange efficiency may be improved. Accordingly, a temperature and humidity transfer performance via air may be improved.

In this case, the adhesive according to an embodiment of the present disclosure described above may exhibit excellent performance. That is, the adhesive according to an embodiment of the present disclosure may satisfy characteristics such as the hygroscopicity and the flame retardancy required by the total heat exchanging element.

Moreover, because the adhesive according to an embodiment of the present disclosure contains the carboxy methyl cellulose 30 and has a relatively weak force to spread to the first total heat exchanging sheet 110 and the second total heat exchanging sheet 121, the applied state of the adhesive may be maintained until the adhesive is dried.

Therefore, the adhesive strength during the application of the adhesive may be maintained, and adhesion surfaces of the first total heat exchanging sheet 110 and the second total heat exchanging sheet 121 may be maintained evenly even after the adhesive is dried.

The total heat exchanging element shown in FIG. 8 corresponds to an example in which a contact area E between the first total heat exchanging sheet 110 and the second total heat exchanging sheet 122 is more increased than that in FIG. 7.

As such, as the contact area E increases, the effect of the performance of the adhesive on the efficiency of the total heat exchanging element may be further increased.

As described above, the adhesive according to an embodiment of the present disclosure described above may exhibit the excellent performance. That is, the adhesive according to an embodiment of the present disclosure may satisfy the characteristics such as the hygroscopicity and the flame retardancy required by the total heat exchanging element.

In addition, when the hygroscopicity is imparted to the adhesive, the latent heat exchange efficiency may be improved. Accordingly, the temperature and humidity transfer performance via the air may be improved.

Moreover, when the adhesive according to an embodiment of the present disclosure is applied, a tendency of the adhesive to spread to the first total heat exchanging sheet 110 and the second total heat exchanging sheet 122 is reduced, so that the applied state of the adhesive may be maintained until the adhesive is dried.

Therefore, the adhesive strength during the application of the adhesive may be maintained, and adhesion surfaces of the first total heat exchanging sheet 110 and the second total heat exchanging sheet 122 may be maintained evenly even after the adhesive is dried.

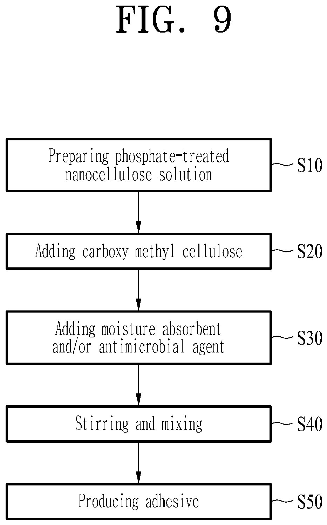

FIG. 9 is a flowchart illustrating a method for producing an adhesive according to an embodiment of the present disclosure.

Referring to FIG. 9, the method for producing the adhesive containing the solid content dispersed in the water according to an embodiment of the present disclosure is shown. Hereinafter, the production method according to an embodiment of the present disclosure will be described with reference to FIG. 9. In this regard, the production method may be illustrated with reference to FIG. 1 together.

First, a step (S10) of obtaining a first solution in which the nanocellulose 20 is dispersed may be performed. That is, a nanocellulose solution may be obtained by dispersing the nanocellulose fibers 21 in a solvent (water).

In this regard, the nanocellulose fiber 21 may be endowed with the phosphoric acid functional group 22. That is, the nanocellulose solution may be a phosphate-treated nanocellulose solution.

As the phosphoric acid functional group 22 of the phosphate-treated nanocellulose 20, at least one of acidic/basic organic/inorganic metal salts may be endowed. In this regard, the content of the phosphoric acid functional group 22 is advantageously in the range from 0.5 mmol/g to 3.0 mmol/g.

Such phosphate-treated nanocellulose 20 may be dispersed in the water in the amount of 0.1 to 5 % by weight.

Subsequently, a step (S20) of obtaining a second solution in which the carboxy methyl cellulose 30 in which the carboxy methyl group 32 is endowed to the nanocellulose fiber 31 is dispersed may be performed.

The acidic/basic and organic/inorganic metal salts may be used as the carboxy methyl group 32 of the carboxy methyl cellulose 30. In this regard, the content of the carboxy methyl group 32 is advantageously in the range from 0.5 and 3.0 mmol/g.

The carboxy methyl cellulose 30 may be dispersed in the water in the amount of 0.1 to 5 % by weight.

Thereafter, a step (S40) of mixing the first solution and the second solution prepared via the above processes to each other may be performed, and thus the adhesive may be produced (S50).

For the stirring and the mixing of the first solution and the second solution, at least one of a water jet mill, a high-speed defibrator, a grinder, a high-pressure homogenizer, a high-pressure impingement mill, a ball mill, a bead mill, a disk refiner, a conical refiner, a 2-axis kneader, a vibrating mill, a homomixer under high-speed rotation, and a beater may be used.

In one example, at least one of steps (S30) of adding the inorganic moisture absorbent 40 and/or the antimicrobial agent 50 may be further performed before the step (S40) of mixing the first solution and the second solution to each other.

As the absorbent 40, the calcium chloride, the lithium chloride, the magnesium chloride, the silica gel, or the like may be used.

In addition, the antimicrobial agent 50 may be the inorganic antimicrobial agent or the organic antimicrobial agent.

As the inorganic antimicrobial agent, the porous inorganic antimicrobial agent loaded with the metal having the antibacterial properties, such as Ag, Cu, or Zn, may be used. In addition, the bronopol, the phenylphenols, or the benzothiazolines may be used as the organic antimicrobial agent.

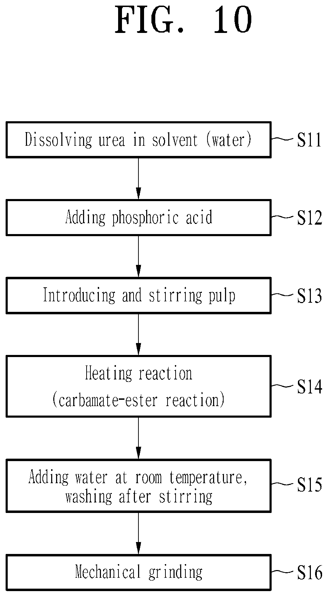

FIG. 10 is a flowchart illustrating a process of obtaining a solution in which nanocellulose is dispersed in a method for producing an adhesive according to an embodiment of the present disclosure.

Referring to FIG. 10, the step (S10) of obtaining the first solution in which the nanocellulose 20 is dispersed described above will be described in more detail.

First, a process (S11) of dissolving urea in the solvent (the water) may be performed.

In this regard, a mixing ratio of the water and the urea is preferably in a range from 1:1 weight ratio to 1:3 weight ratio. In the dissolving process of the urea, it is advantageous that the urea is stirred at a temperature range in a range from 30 to 80 °C.

Thereafter, phosphoric acid may be added (S12).

A concentration of the phosphoric acid is one of conditions that has the greatest influence on physical properties of the nanocellulose 20 after the reaction. An amount of the phosphoric acid added to pulp is advantageous from pulp: phosphoric acid=1:0.01 to 1:0.5 weight ratio.

In this regard, the amount of the phosphoric acid added to the pulp is more preferably from 1:0.1 to 1:0.5 by weight. The urea should be at least twice the amount of phosphoric acid added to obtain long-fiber nanocellulose by minimizing a fiber damage caused by the phosphoric acid.

Then, the pulp may be introduced and stirred (S13).

It is advantageous to add the pulp in a state in which a surface area thereof capable of reacting is increased using defibration, beating, or a mixer. A pulp input amount relative to the solvent (the water + the urea) may be an amount at which all of the pulp may be sufficiently impregnated.

In such state, a heating reaction (a carbamate-ester reaction) may be performed (S14).

In this regard, a reaction temperature is a temperature at which the urea may be thermally decomposed and a carbamate reaction may occur together, and is preferably in a range from 100 °C to 250 °C. More preferably, the reaction temperature may be in a range from 120 °C to 200 °C.

A reaction time is preferably between 30 minutes and 4 hours. A critical temperature range is from 100 °C to 50 °C. The carbamate reaction does not occur when the temperature is equal to or lower than a minimum critical temperature, and thermal damage to the fiber occurs, which is a limitation, when the temperature is equal to or higher than a maximum critical temperature.

Thereafter, a process (S15) of washing the solution after adding water to the solution and stirring the water may be performed.

In this regard, distilled water at a room temperature may be added to the solution and stirred to evenly dilute the solution, and the washing may be performed using a sieve. Such process may proceed until a pH of the solution becomes neutral.

Then, the nanocellulose 20 may be obtained via mechanical grinding (S16).

For the mechanical grinding, at least one of the water jet mill, the high-speed defibrator, the grinder, the high-pressure homogenizer, the high-pressure impingement mill, the ball mill, the bead mill, the disk refiner, the conical refiner, the 2-axis kneader, the vibrating mill, the homomixer under the high-speed rotation, an ultrasonic disperser, and the beater may be used.

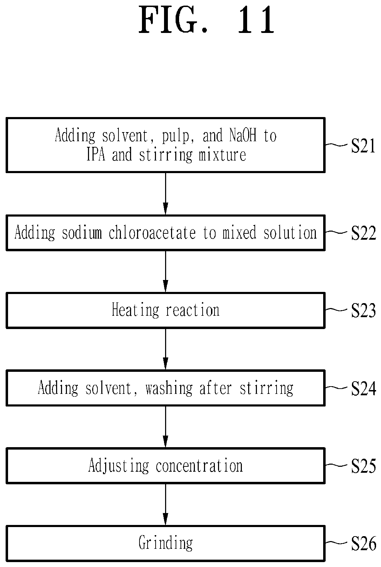

FIG. 11 is a flowchart illustrating a process of obtaining a solution in which carboxy methyl cellulose is dispersed in a method for producing an adhesive according to an embodiment of the present disclosure.

Referring to FIG. 11, the step (S20) of obtaining the second solution in which the carboxy methyl cellulose 30 is dispersed described above will be described in more detail.

First, the solvent (the water), the pulp, and sodium hydroxide (NaOH) may be mixed with and stirred with isopropyl alcohol (IPA) (S21).

In this regard, a mixing ratio of the isopropyl alcohol (IPA) and the pulp may range from a weight ratio of 15:1 to a weight ratio of 40:1. A mixing ratio of the water and the pulp is advantageously ranging from a weight ratio of 0.5:1 to a weight ratio of 3:1.

Thereafter, sodium chloroacetate may be added to the mixed solution obtained in the above process (S22).

In this regard, a mixing ratio of the mixed solution and the sodium chloroacetate may range from a weight ratio of 10:1 to a weight ratio of 50:1.

Then, a heating reaction may be performed (S23).

A temperature range in which the heating reaction takes place may be from 35 to 90 °C. In this regard, a temperature range from 50 to 80 °C may be more advantageous.

Thereafter, the solvent (the water) may be added to the mixed solution and stirred, and then washing may be performed (S24).

In this regard, after the distilled water at the room temperature is added to the mixed solution and stirred to evenly dilute the mixed solution, the washing may be performed using the sieve. Such process may proceed until a pH of the solution becomes neutral.

Thereafter, a process of adjusting a concentration may be performed (S25).

This is because viscosity may increase based on a subsequent grinding process. Considering a performance of grinding equipment, a pulp concentration is advantageously in a range from 0.1 to 3.0 wt%.

Then, the carboxy methyl cellulose 30 may be obtained via the mechanical grinding (S26).

For the mechanical grinding, at least one of underwater counter collision, the high-speed defibrator, the grinder, the high-pressure homogenizer, a high-pressure impingement grinder, the ball mill, the bead mill, the disk refiner, the conical refiner, the 2-axis kneader, the vibrating mill, the homomixer under the high-speed rotation, the ultrasonic disperser, and the beater may be used.

Table 1 below shows an evaluation result of the adhesive strength of the adhesive according to Present Example of the present disclosure described above. In this regard, as Comparative Examples, a vinyl acetate adhesive and adhesives in which the nanocellulose (CNF), the carboxymethyl cellulose (CMC), the moisture absorbent, and the antimicrobial agent are selectively used are shown together.

Referring to Table 1, it may be seen that, even when only the nanocellulose (CNF) and the carboxymethyl cellulose (CMC) are contained, the hygroscopic degree is greatly increased as a content of the solid content is greatly reduced compared to the case of conventional vinyl acetate adhesive. In addition, it is shown that the flame retardancy may be imparted.

In addition, it may be seen that the antibacterial properties and the viscosity are satisfied as the moisture absorbent and the antimicrobial agent are added.

**[Table 1]**

| Adhesive strength evaluation | | | | | | | | |
|---|---|---|---|---|---|---|---|---|
| Sample | Composition | Solid content content (%) | Adhesive strength (kgf/mm²) | Hygroscopic degree (%) | Properties that prevent spread of moisture | Flame retardancy | Antibacterial properties | Processability (viscosity) |
| Ref. vinyl acetate | Vinyl acetate adhesive | 20.3 | 2.8 | 0.3 | O | X | X | O |
| CNF | CNF | 3.0 | 2.9 | 0.7 | X | O | X | X |
| CNF+CMC | CNF:CMC=1:1 | 3.0 | 3.0 | 1.6 | O | O | X | X |
| CNF+CMC+moisture absorbent | CNF:CMC=1:1, moisture absorbent 15%, | 1.1 | 2.1 | 2.3 | O | O | X | O |
| CNF+CMC+moisture absorbent+antimicrobial agent | CNF:CMC=1:1, moisture absorbent 15%, antimicrobial agent 2% | 1.4 | 2.0 | 2.4 | O | O | O | O |
| CNF+CMC+moisture absorbent+antimicrobial agent | CNF:CMC=1:3, moisture absorbent 15%, antimicrobial agent **2%** | 1.4 | 2.7 | 2.5 | O | O | O | O |

Table 2 below shows an evaluation result of the flame retardancy and the antibacterial properties of the adhesive according to Present Example of the present disclosure described above. In this regard, as Comparative Examples, the vinyl acetate adhesive and the adhesives in which the nanocellulose (CNF), the carboxymethyl cellulose (CMC), and the moisture absorbent (LiCl) are selectively used are shown together.

**[Table 2]**

| Flame retardancy and antibacterial properties evaluation | | |
|---|---|---|
| Condition | | Flame retardancy (number of samples 1) |
| (drying temperature 105 °C, 60 minutes) | | |
| | | KS F 2819 |
| Vinyl acetate | Water-soluble adhesive (water 3: undiluted solution 7) | Flame retardant grade 3 (continue burning) |
| CNF | Acid introduced amount 2.7 mmol/g | Flame retardant grade 1 (after-flame time equal to or smaller than 1 second) |
| CMC | - | Flame retardant grade 3 (after-flame time 30 seconds) |
| CNF + CMC | 5:5 ratio mix | Flame retardant grade 1 (after-flame time equal to or smaller than 1 second) |
| CNF + CMC + LiCl (20 %) | 5:5:2 ratio mix | Flame retardant grade 1 (after-flame time equal to or smaller than 1 second) |

Referring to Table 2, it may be seen that, even when the nanocellulose (CNF) and the carboxymethyl cellulose (CMC) are contained, a flame retardant grade 1 is satisfied.

In addition, even when 20 % of the moisture absorbent (LiCl) is contained therein, the flame retardant grade may also be satisfied. In this regard, the flame retardant grade 1 means a condition in which a char length is equal to or smaller than 5 cm, an after-flame time is equal to or smaller than 1 second, and an after-glow time is equal to or smaller than 1 minute.

The above description is merely illustrative of the technical idea of the present disclosure. Those of ordinary skill in the art to which the present disclosure pertains will be able to make various modifications and variations without departing from the essential characteristics of the present disclosure.

Therefore, embodiments disclosed in the present disclosure are not intended to limit the technical idea of the present disclosure, but to describe, and the scope of the technical idea of the present disclosure is not limited by such embodiments.

The scope of protection of the present disclosure should be interpreted by the claims below, and all technical ideas within the scope equivalent thereto should be construed as being included in the scope of the present disclosure.

### [Industrial Applicability]

According to the present disclosure, the adhesive containing the cellulose fibers, the structure and the total heat exchanging element including the dried adhesive layer, and the method for producing the same may be provided.

## Claims

1. An adhesive containing a solid content dispersed in water, wherein the solid content contains:
nanocellulose; and
carboxy methyl cellulose endowed with a carboxy methyl group.

2. The adhesive of claim 1, wherein the nanocellulose is contained in 0.1 to 5 % by weight and the carboxy methyl cellulose is contained in 0.1 to 5 % by weight.

3. The adhesive of claim 1, further containing an inorganic moisture absorbent.

4. The adhesive of claim 3, wherein the inorganic moisture absorbent includes at least one of calcium chloride, lithium chloride, magnesium chloride, or silica gel.

5. The adhesive of claim 3, wherein the inorganic moisture absorbent is contained in 0.1 to 1 % by weight.

6. The adhesive of claim 1, further containing an antimicrobial agent.

7. The adhesive of claim 6, wherein the antimicrobial agent includes at least one of a porous inorganic antimicrobial agent loaded with Ag, Cu, or Zn, or an organic antimicrobial agent containing bronopol, phenylphenols, or benzothiazolines.

8. The adhesive of claim 6, wherein the antimicrobial agent is contained in 0.1 to 1 % by weight.

9. The adhesive of claim 1, wherein the nanocellulose has a diameter in a range from 1 to 50 nm.

10. The adhesive of claim 1, wherein the nanocellulose is endowed with a phosphoric acid functional group.

11. The adhesive of claim 10, wherein each of the phosphoric acid functional group and the carboxy methyl group is endowed at a ratio in a range from 0.5 to 3.0 mmol/g.

12. The adhesive of claim 1, wherein the carboxy methyl cellulose is for preventing the water from spreading to an object to be adhered.

13. The adhesive of claim 1, wherein a content of the water is in a range from 88.0 to 99.6 % by weight.

14. A structure comprising:
a dried adhesive layer disposed between a first member and a second member,
wherein the dried adhesive layer contains:
15 to 35 % by weight of nanocellulose; and
65 to 85 % by weight of carboxy methyl cellulose endowed with a carboxy methyl group.

15. The structure of claim 14, wherein the dried adhesive layer further contains an inorganic moisture absorbent.

16. The structure of claim 15, wherein the inorganic moisture absorbent includes at least one of calcium chloride, lithium chloride, magnesium chloride, or silica gel.

17. The structure of claim 14, wherein the dried adhesive layer further contains an antimicrobial agent.

18. The structure of claim 17, wherein the antimicrobial agent includes at least one of a porous inorganic antimicrobial agent loaded with Ag, Cu, or Zn, or an organic antimicrobial agent containing bronopol, phenylphenols, or benzothiazolines.

19. The structure of claim 14, wherein the nanocellulose is endowed with a phosphoric acid functional group.

20. A total heat exchanging element having a dried adhesive layer, the total heat exchanging element comprising:
a first total heat exchanging sheet;
a second total heat exchanging sheet; and
the dried adhesive layer positioned between the first total heat exchanging sheet and the second total heat exchanging sheet,
wherein the dried adhesive layer contains:
15 to 35 % by weight of nanocellulose; and
65 to 85 % by weight of carboxy methyl cellulose endowed with a carboxy methyl group.
